# EUROPÄISCHE PATENTSCHRIFT

(11) **EP 4 001 602 B1**
(45) Veröffentlichungstag und Bekanntmachung des Hinweises auf die Patenterteilung: **14.02.2024**
(21) Anmeldenummer: 21202549.8
(22) Anmeldetag: 14.10.2021
(51) Int. Cl.: F01N 3/027, F01N 3/20

(54) **ABGASHEIZANORDNUNG**
EXHAUST GAS HEATING ARRANGEMENT
AGENCEMENT DE CHAUFFAGE POUR GAZ D'ÉCHAPPEMENT

(30) Priorität: 18.11.2020 DE 102020130429
(43) Veröffentlichungstag der Anmeldung: 25.05.2022
(73) Patentinhaber: Purem GmbH, 66539 Neunkirchen (DE)
(72) Erfinder: Tauschek, Thomas, Ostfildern (DE); Zavadil, Jürgen, Esslingen (DE); Tüch, Markus, Bad Überkingen (DE); Riekers, Ralf, Stuttgart (DE); Schacht, Alexej, Salach (DE)
(74) Vertreter: Ruttensperger Lachnit Trossin Gomoll

(56) Entgegenhaltungen:
- WO-A1-2014/100118
- WO-A1-2017/151975

## Beschreibung

Die vorliegende Erfindung betrifft eine Abgasheizanordnung für eine Abgasanlage einer Brennkraftmaschine mit einem von Abgas durchströmbaren Heizeinheitgehäuse.

Aus der DE 10 2019 107 384 A1 ist eine Abgasheizanordnung für eine Abgasanlage einer Brennkraftmaschine in einem Fahrzeug bekannt, bei welcher in einem rohrartigen, mit im Wesentlichen kreisrunder Umfangskontur ausgebildeten Heizeinheitgehäuse eine spiralförmig gewundene Heizeinheit angeordnet ist. Die Heizeinheit umfasst einen Mantelheizleiter mit einem Mantel und einem in dem Mantel verlaufenden Heizleiterelement. Durch Anlegen einer elektrischen Spannung an das Heizleiterelement wird dieses von elektrischem Strom durchflossen. Die dabei aufgrund des elektrischen Widerstandes entstehende Wärme wird über den Mantel auf eine den Mantel an seiner Außenseite umgebende Wärmeübertragungsformation übertragen. Die Wärmeübertragungsformation hat eine mäanderartige Struktur mit zueinander im Wesentlichen parallel angeordneten, in Verbindungsabschnitten miteinander verbundenen und in einem jeweiligen zentralen Bereich von dem Mantel durchsetzten Wärmeübertragungsabschnitten. Das Heizeinheitgehäuse in einer im Wesentlichen der Richtung einer Gehäuselängsachse entsprechenden Abgas-Hauptströmungsrichtung durchströmendes Abgas strömt entlang der Oberflächen der Wärmeübertragungsabschnitte bzw. Verbindungsabschnitte und nimmt dabei Wärme auf.

Mit einer derartigen Abgasheizanordnung kann insbesondere in einer Startphase des Betriebs einer Brennkraftmaschine, in welcher das von der Brennkraftmaschine ausgestoßene Abgas eine vergleichsweise niedrige Temperatur hat und auch die in der Abgasanlage vorgesehenen Abgasbehandlungsanordnungen, insbesondere ein oder mehrere Katalysatoren, noch eine vergleichsweise niedrige Temperatur haben und somit eine effiziente Minderung des im Abgas enthaltenen Schadstoffanteils nicht erreichbar ist, der Abgasstrom erwärmt werden und somit Wärme in stromabwärts der Abgasheizanordnung positionierte Systembereiche, insbesondere Abgasbehandlungsanordnungen, eintragen. Dies hat zur Folge, dass die Zeitdauer, während welcher am Beginn des Betriebs der Brennkraftmaschine eine effiziente Abgasreinigung nicht stattfinden kann, deutlich verkürzt werden kann.

Aus der WO 2017/0151975 A1 ist eine Abgasheizanordnung gemäß dem Oberbegriff des Anspruchs 1 bekannt. Bei dieser Abgasheizanordnung sind in einem von Abgas durchströmbaren Heizeinheitgehäuse quer zu einer Abgasströmungsrichtung nebeneinander mehrere Heizeinheiten vorgesehen. Jede Heizeinheit umfasst einen in Richtung einer Heizeinheit-Längsachse langgestreckten, hülsenartigen Mantel, der in seinen beiden Längsendbereichen vermittels eines diesen und Öffnungen im Heizeinheitgehäuse durchsetzenden Stabs am Heizeinheitgehäuse getragen ist. An der Außenseite der mit elektrisch isolierendem Material aufgebauten Mäntel der Heizeinheiten ist ein mit grundsätzlich mäanderartiger Struktur aufgebautes Widerstandsheizelement angeordnet.

Es ist die Aufgabe der vorliegenden Erfindung, eine Abgasheizanordnung für eine Abgasanlage einer Brennkraftmaschine vorzusehen, welche bei mechanisch stabilem Aufbau eine effiziente Übertragung von Wärme auf in einer Abgasanlage strömendes Abgas ermöglicht.

Erfindungsgemäß wird diese Aufgabe gelöst durch eine Abgasheizanordnung für eine Abgasanlage einer Brennkraftmaschine gemäß Anspruch 1. Diese Abgasheizanordnung umfasst ein von Abgas durchströmbares Heizeinheitgehäuse und eine Mehrzahl von in dem Heizeinheitgehäuse angeordneten, in Richtung einer Heizeinheit-Längsachse langgestreckten Heizeinheiten jeweils mit einem ersten Heizeinheit-Längsendbereich und einem zweiten Heizeinheit-Längsendbereich, wobei die Heizeinheiten in ihren ersten Heizeinheit-Längsendbereichen und ihren zweiten Heizeinheit-Längsendbereichen vermittels einer Trägerstruktur bezüglich des Heizeinheitgehäuses getragen sind, wobei wenigstens eine, vorzugsweise jede Heizeinheit mit ihrem ersten Heizeinheit-Längsendbereich oder/und ihrem zweiten Heizeinheit-Längsendbereich an der Trägerstruktur in der Heizeinheit-Längsrichtung bewegbar getragen ist.

Wenigstens eine der Heizeinheiten ist als sogenannter Mantelheizleiter ausgebildet. Dazu umfasst wenigstens eine, vorzugsweise jede Heizeinheit einen in Richtung der Heizeinheit-Längsachse langgestreckten Mantel, in dem Mantel ein Heizleiterelement und an einer Außenseite des Mantels eine Wärmeübertragungsformation.

Bei dem erfindungsgemäßen Aufbau einer Abgasheizanordnung sind die Heizeinheiten in zumindest einem ihrer Endbereiche bezüglich des Heizeinheitgehäuses bewegbar getragen, so dass eine im Heizbetrieb durch eine thermisch induzierte Ausdehnung der Heizeinheiten entstehende Überlastung derjenigen Bereiche, in welchen die Heizeinheiten bezüglich des Heizeinheitgehäuses getragen sind, vermieden wird. Durch die bei dem erfindungsgemäßen Aufbau ermöglichte Relativbewegung zwischen den Heizeinheiten in zumindest einem ihrer Längsendbereiche und dem Gehäuse kann die bei Erwärmung und auch bei Abkühlung der Heizeinheiten auftretende Längenveränderung derselben kompensiert bzw. aufgefangen werden. Besonders vorteilhaft ist dabei, wenn in beiden Längsendbereichen der Heizeinheiten eine derartige Relativbewegung bezüglich des Heizeinheitgehäuses ermöglicht ist, so dass durch die zusätzliche Führung eine Anhebung der Eigenfrequenzen der auch als Schwingungssysteme zu betrachtenden Heizeinheiten erreicht wird und gleichermaßen zu einer Überlastung der Verbindung mit dem Heizeinheitgehäuse führende Auftreten von Eigenschwingungen vermieden werden kann.

Um die eine Relativbewegung zwischen den Heizeinheiten und dem Heizeinheitgehäuse zulassende Ankopplung der Heizeinheiten an das Heizeinheitgehäuse in baulich einfacher Weise realisieren zu können, wird vorgeschlagen, dass die Trägerstruktur in Zuordnung zu den ersten Heizeinheit-Längsendbereichen ein an dem Heizeinheitgehäuse getragenes, von den Heizeinheiten im Bereich von Trägerelement-Durchgangsöffnungen durchsetztes erstes Trägerelement umfasst, oder/und dass die Trägerstruktur in Zuordnung zu den zweiten Heizeinheit-Längsendbereichen ein an dem Heizeinheitgehäuse getragenes, von den Heizeinheiten im Bereich von Trägerelement-Durchgangsöffnungen durchsetztes zweites Trägerelement umfasst.

Dabei kann wenigstens eine, vorzugsweise jede Heizeinheit in ihrem ersten Heizeinheit-Längsendbereich eine Trägerelement-Durchgangsöffnung derart durchsetzen, dass der erste Heizeinheit-Längsendbereich in Richtung der Heizeinheit-Längsachse bezüglich des ersten Trägerelements bewegbar ist, oder/und kann wenigstens eine, vorzugsweise jede Heizeinheit in ihrem zweiten Heizeinheit-Längsendbereich eine Trägerelement-Durchgangsöffnung derart durchsetzen, dass der zweite Heizeinheit-Längsendbereich in Richtung der Heizeinheit-Längsachse bezüglich des zweiten Trägerelements bewegbar ist. Die Heizeinheiten können in den jeweiligen Trägerelement-Durchgangsöffnungen unter Erzeugung eines Reibschlusses derart gehalten sein, dass einerseits eine Relativbewegung bezüglich eines jeweiligen Trägerelements im Bereich der Trägerelement-Durchgangsöffnungen möglich ist, andererseits durch diese Relativbewegung auch Energie dissipiert werden kann und somit das Auftreten von Schwingungen unterbunden werden kann.

Bei einer eine Relativbewegung ebenfalls zulassenden Ausgestaltung kann vorgesehen sein, dass das erste Trägerelement in Richtung der Heizeinheit-Längsachse flexibel ist, und dass wenigstens eine, vorzugsweise jede Heizeinheit in ihrem ersten Heizeinheit-Längsendbereichen an dem ersten Trägerelement festgelegt ist, oder/und dass das zweite Trägerelement in Richtung der Heizeinheit-Längsachse flexibel ist, und dass wenigstens eine, vorzugsweise jede Heizeinheit in ihrem zweiten Heizeinheit-Längsendbereichen an dem zweiten Trägerelement festgelegt ist. Die Flexibilität, also im Wesentlichen elastische Verformbarkeit der Trägerelemente ermöglicht somit eine Bewegung der an diese beispielsweise durch Verlötung fest angebundenen Heizeinheiten bezüglich des Heizeinheitgehäuses, so dass die thermisch induzierte Längenänderung der Heizeinheiten durch eine Verformung der mit diesen fest verbundenen Trägerelemente aufgefangen werden kann, wodurch insbesondere auch eine übermäßige Belastung der beispielsweise durch Materialschluss oder auch einen festen Reibschluss generierten Bereiche, in welchen die Heizeinheiten fest an ein jeweiliges Trägerelement angebunden sind, vermieden wird.

Eine einfach zu realisierende, und insbesondere auch die erforderliche Flexibilität gewährleistende Ausgestaltung kann dadurch erreicht werden, dass das erste Trägerelement im Wesentlichen U-förmig ausgebildet ist mit zwei U-Schenkeln und einem die beiden U-Schenkel verbindenden Verbindungssteg, wobei einer erster U-Schenkel des ersten Trägerelements an dem Heizeinheitgehäuse festgelegt ist und in einem zweiten U-Schenkel des ersten Trägerelements die Trägerelement-Durchgangsöffnungen des ersten Trägerelements vorgesehen sind oder/und wobei der Verbindungssteg des ersten Trägerelements in Richtung zu einer Anströmseite des Heizeinheitgehäuses angeordnet ist, oder/und dass das zweite Trägerelement im Wesentlichen U-förmig ausgebildet ist mit zwei U-Schenkeln und einem die beiden U-Schenkel verbindenden Verbindungssteg, wobei einer erster U-Schenkel des zweiten Trägerelements an dem Heizeinheitgehäuse festgelegt ist und in einem zweiten U-Schenkel des zweiten Trägerelements die Trägerelement-Durchgangsöffnungen des zweiten Trägerelements vorgesehen sind oder/und wobei der Verbindungssteg des zweiten Trägerelements in Richtung zu einer Anströmseite des Heizeinheitgehäuses angeordnet ist. Je nach Auswahl der Materialstärke der beispielsweise aus Blechmaterial gebogenen, U-förmigen Trägerelemente können diese somit entweder im Wesentlichen starr ausgebildet oder flexibel ausgebildet sein, um erforderlichenfalls die thermisch induzierte Längenänderung der Heizelemente in den Trägerelementen aufnehmen zu können.

Um durch Leiten eines elektrischen Stroms durch die Heizeinheiten hindurch in diesen Wärme generieren zu können, wird weiter vorgeschlagen, dass wenigstens eine Heizeinheit in ihrem ersten Heizeinheit-Längsendbereich mit wenigstens einer weiteren Heizeinheit in deren ersten Längsendbereich elektrisch leitend verbunden ist oder/und in ihrem zweiten Heizeinheit-Längsendbereich mit wenigstens einer weiteren Heizeinheit in deren zweiten Heizeinheit-Längsendbereich elektrisch leitend verbunden ist.

Insbesondere zur Erreichung einer Serienschaltung von Heizeinheiten kann dabei wenigstens eine Heizeinheit in ihrem ersten Heizeinheit-Längsendbereich mit wenigstens einer weiteren Heizeinheit elektrisch leitend verbunden sein und in ihrem zweiten Heizeinheit-Längsendbereich mit wenigstens einer anderen weiteren Heizeinheit elektrisch leitend verbunden sein.

Abhängig von der zur Verfügung stehenden Bordspannung und dem bei den jeweiligen Heizeinheiten vorzusehenden Spannungsabfall können wenigstens zwei, vorzugsweise alle Heizeinheiten elektrisch zueinander parallel geschaltet sein oder/und können wenigstens zwei, vorzugsweise alle Heizeinheiten elektrisch zueinander seriell geschaltet sein.

Bei einer besonders vorteilhaften Ausgestaltungsform können wenigstens zwei, vorzugsweise alle Heizeinheiten in ihren ersten Heizeinheit-Längsendbereichen mit wenigstens einer weiteren Heizeinheit in einem von den beiden U-Schenkeln des ersten Trägerelements umgrenzten Trägerelement-Innenraum elektrisch leitend verbunden sein, oder/und können wenigstens zwei, vorzugsweise alle Heizeinheiten in ihren zweiten Heizeinheit-Längsendbereichen mit wenigstens einer weiteren Heizeinheit in einem von den beiden U-Schenkeln des zweiten Trägerelements umgrenzten Trägerelement-Innenraum elektrisch leitend verbunden sein. Damit wird auch die Möglichkeit geschaffen, den Bereich, in welchem Heizeinheiten elektrisch miteinander verbunden sind, durch ein jeweiliges Trägerelement gegen die direkte Anströmung mit Abgas und somit gegen eine übermäßige Erhitzung abzuschirmen.

Bei einer alternativen Ausgestaltungsform, bei welcher die Bereiche der elektrischen Verbindung von Heizeinheiten gleichermaßen gegen die direkte Anströmung mit Abgas abgeschirmt sind wird vorgeschlagen, dass wenigstens zwei, vorzugsweise alle Heizeinheiten in ihren ersten Heizeinheit-Längsendbereichen eine Gehäuse-Durchgangsöffnung des Heizeinheitgehäuses durchsetzen und miteinander oder/und mit wenigstens einer weiteren Heizeinheit an der Außenseite des Heizeinheitgehäuses elektrisch leitend verbunden sind, oder/und dass wenigstens zwei, vorzugsweise alle Heizeinheiten in ihren zweiten Heizeinheit-Längsendbereichen eine Gehäuse-Durchgangsöffnung des Heizeinheitgehäuses durchsetzen und miteinander oder/und mit wenigstens einer weiteren Heizeinheit an der Außenseite des Heizeinheitgehäuses elektrisch leitend verbunden sind.

Um dabei den Austritt von Abgas nach außen zu unterbinden, kann an der Außenseite des Heizeinheitgehäuses in Zuordnung zu den ersten Heizeinheit-Längsendbereichen ein durch wenigstens ein Abdeckelement im Wesentlichen gasdicht abgeschlossener erster Heizeinheit-Verbindungsraum zur elektrischen Verbindung wenigstens zweier Heizeinheiten in ihren ersten Heizeinheit-Längsendbereichen außerhalb des Heizeinheitgehäuses vorgesehen sein, oder/und kann an der Außenseite des Heizeinheitgehäuses in Zuordnung zu den zweiten Heizeinheit-Längsendbereichen ein durch wenigstens ein Abdeckelement im Wesentlichen gasdicht abgeschlossener zweiter Heizeinheit-Verbindungsraum zur elektrischen Verbindung wenigstens zweier Heizeinheiten in ihren zweiten Heizeinheit-Längsendbereichen außerhalb des Heizeinheitgehäuses vorgesehen sein.

Eine effiziente thermische Wechselwirkung zwischen den Heizeinheiten und dem diese umströmenden Abgas kann gemäß der vorliegenden Erfindung dadurch erreicht werden, dass wenigstens zwei, vorzugsweise alle Heizeinheiten mit zueinander im Wesentlichen parallelen Heizeinheit-Längsachsen angeordnet sind, oder/und dass wenigstens zwei, vorzugsweise alle Heizeinheiten mit in einer zu einer Gehäuse-Längsachse des Heizeinheitgehäuses im Wesentlichen orthogonalen Ebene liegenden Heizeinheit-Längsachsen angeordnet sind. Für einen kompakten Aufbau wird weiter vorgeschlagen, dass wenigstens eine, vorzugsweise jede Heizeinheit entlang der Heizeinheit-Längsachse geradlinig langgestreckt ist.

Eine effiziente Umströmung der Heizeinheiten mit Abgas kann auch dadurch unterstützt werden, dass das Heizeinheitgehäuse einen Heizeinheitaufnahmebereich mit im Wesentlichen rechteckiger Innenumfangskontur aufweist, wobei die Heizeinheiten im Heizeinheitaufnahmebereich angeordnet sind, und dass das Heizeinheitgehäuse in einem stromaufwärtigen Anschlussbereich eine im Wesentlichen runde Innenumfangskontur aufweist oder/und in einem stromabwärtigen Anschlussbereich eine im Wesentlichen runde Innenumfangskontur aufweist. Somit wird einerseits die Möglichkeit geschaffen, die erfindungsgemäße Abgasheizanordnung an andere Systembereiche einer Abgasanlage, welche im Allgemeinen eine runde, beispielsweise kreisrunde Querschnittsgeometrie aufweisen, anzubinden, während in dem Bereich, in welchem die Heizeinheiten angeordnet sind, nahezu der gesamte Strömungsquerschnitt effizient mit den Heizeinheiten belegt werden kann und somit das das Heizeinheitgehäuse durchströmende Abgas in thermische Wechselwirkung mit den Heizeinheiten gezwungen wird.

Für eine effiziente Wärmeübertragung auf die Heizeinheiten umströmendes Abgas wird weiter vorgeschlagen, dass bei wenigstens einer, vorzugsweise jeder Heizeinheit die Wärmeübertragungsformation eine Mehrzahl von in Richtung der Heizeinheit-Längsachse aufeinanderfolgenden, zueinander im Wesentlichen parallelen Wärmeübertragungsabschnitten umfasst, oder/und dass bei wenigstens einer, vorzugsweise jeder Heizeinheit die Wärmeübertragungsformation mäanderartig ausgebildet ist mit einer Mehrzahl von zueinander im Wesentlichen parallelen, durch Verbindungsabschnitte miteinander verbundenen Wärmeübertragungsabschnitten. Alternativ oder zusätzlich kann für eine Verringerung der Anzahl der zum Aufbau einer erfindungsgemäßen Abgasheizanordnung erforderlichen Bauteile vorgesehen sein, dass wenigstens eine Wärmeübertragungsformation an der Außenseite der Mäntel wenigstens zweier Heizeinheiten vorgesehen ist. Durch das Verbinden einzelner Wärmeübertragungsabschnitte in einer beispielsweise mäanderartigen Struktur wird eine zusätzliche Versteifung und damit ein weiteres Anheben der Eigenfrequenz der Wärmeübertragungsformation erreicht. Das Bereitstellen der Wärmeübertragungsabschnitte in einer mäanderartigen Struktur hat weiter den Vorteil, dass die in ihren seitlichen Endbereichen miteinander gekoppelten bzw. aneinander anschließenden Wärmeübertragungsabschnitte weniger stark zu Flatterbewegungen im Abgasstrom neigen. Grundsätzlich können die oder einige der aufeinander folgenden Wärmeübertragungsabschnitte auch separat bereitgestellt und miteinander beispielsweise durch Verlötung verbunden werden. Auch dies führt zu einer erhöhten Steifigkeit einer jeweiligen Wärmeübertragungsformation.

Die Erfindung betrifft ferner eine Abgasanlage für eine Brennkraftmaschine, umfassend wenigstens eine Abgasbehandlungsanordnung, vorzugsweise Katalysator oder/und Partikelfilter, und eine erfindungsgemäß aufgebaute Abgasheizanordnung stromaufwärts bezüglich der wenigstens einen Abgasbehandlungsanordnung.

Die vorliegende Erfindung wird nachfolgend mit Bezug auf die beiliegenden Figuren detailliert beschrieben. Es zeigt:
- Fig. 1: eine perspektivische Ansicht einer Abgasheizanordnung;
- Fig. 2: eine Teil-Längsschnittansicht des unteren Bereichs der Abgasheizanordnung der Fig. 1;
- Fig. 3: eine Axialansicht einer alternativ aufgebauten Abgas-Heizanordnung;
- Fig. 4: eine Längsschnittdarstellung der Abgasheizanordnung der Fig. 3;
- Fig. 5: eine weitere Axialansicht einer alternativ aufgebauten Abgasheizanordnung;
- Fig. 6: ein Schaltungsbeispiel für eine Mehrzahl von Abgasheizeinheiten;
- Fig. 7: eine der Fig. 6 entsprechende Darstellung einer alternativen Schaltung der Abgasheizeinheiten;
- Fig. 8: eine der Fig. 6 entsprechende Darstellung einer alternativen Schaltung der Abgasheizeinheiten;
- Fig. 9: eine der Fig. 6 entsprechende Darstellung einer alternativen Schaltung der Abgasheizeinheiten.

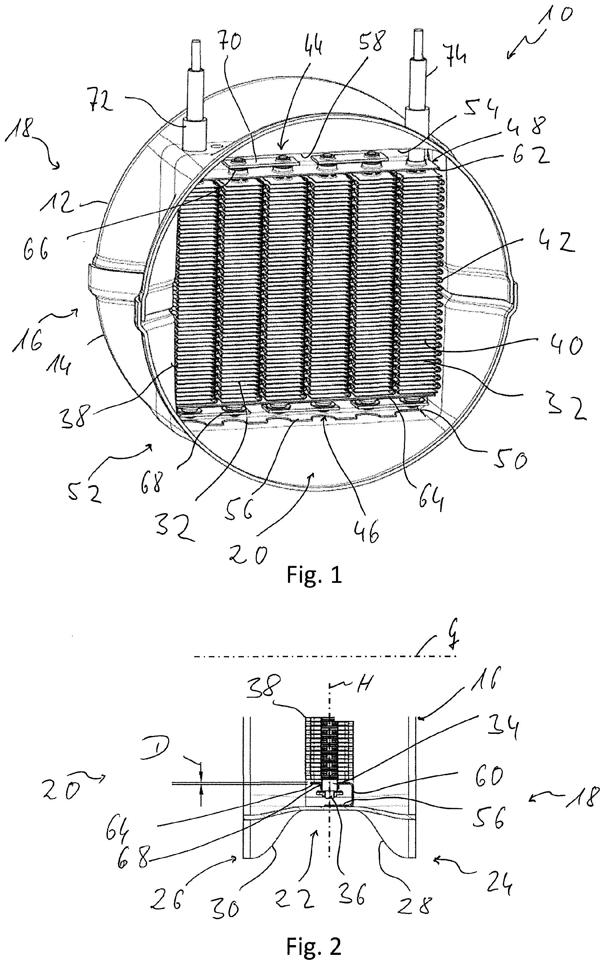

Die Fig. 1 und 2 zeigen ein erstes Ausgestaltungsbeispiel einer allgemein mit 10 bezeichneten Abgasheizanordnung für eine Abgasanlage einer Brennkraftmaschine beispielsweise in einem Fahrzeug. Die Abgasheizanordnung 10 umfasst ein mit zwei Halbschalen 12, 14 aufgebautes Heizeinheitgehäuse 16. In Fig. 1 hinten zu erkennen ist eine Anströmseite 18 der Abgasheizanordnung 10 bzw. des Heizeinheitgehäuses 16, während vorne eine Abströmseite 20 der Abgasheizanordnung 10 bzw. des Heizeinheitgehäuses 16 liegt.

Das Heizeinheitgehäuse 16 ist mit drei in Richtung einer Gehäuse-Längsachse G aufeinanderfolgenden Bereichen aufgebaut. Zentral ist ein HeizeinheitAufnahmebereich 22 vorgesehen, in welchem das Heizeinheitgehäuse 16 mit im Wesentlichen rechteckiger, beispielsweise quadratischer, Innenumfangskontur ausgebildet ist. An der Anströmseite 18 ist das Heizeinheitgehäuse 16 mit einem stromaufwärtigen Anschlussbereich 24 mit im Wesentlichen runder, beispielsweise kreisrunder Innenumfangskontur ausgebildet. Gleichermaßen ist an der Abströmseite 20 das Heizeinheitgehäuse 16 mit im Wesentlichen runder, beispielsweise kreisrunder Innenumfangskontur ausgebildet und stellt einen stromabwärtigen Anschlussbereich 26 bereit. Im stromaufwärtigen Anschlussbereich 24 und im stromabwärtigen Anschlussbereich 26, welche in einem jeweiligen näherungsweise trichterartigen Übergangsbereich 28, 30 in den Heizeinheitaufnahmebereich 22 übergehen, kann das Heizeinheitgehäuse 16 an andere Systembereiche einer Abgasanlage angeschlossen werden.

In dem vom Heizeinheitgehäuse 16 umschlossenen Innenraum ist im Heizeinheitaufnahmebereich 22 eine Mehrzahl von zueinander im Wesentlichen identisch aufgebauten Heizeinheiten 32 vorgesehen. Jede Heizeinheit 32 umfasst einen in Richtung einer Heizeinheit-Längsachse H langgestreckten Mantelheizleiter mit einem beispielsweise mit Metallmaterial aufgebauten, rohrartigen, im Wesentlichen starren Mantel 34 und einem im Inneren des Mantels 34 verlaufenden und bezüglich diesem durch Isoliermaterial elektrisch isoliert gehaltenen Heizleiterelement 36. An einer Außenseite des Mantels 34 ist bei jeder Heizeinheit 32 eine Wärmeübertragungsformation 38 vorgesehen, die im dargestellten Ausgestaltungsbeispiel jeweils eine mäanderartige Struktur mit einer Mehrzahl von in Richtung der Heizeinheit-Längsachsen H aufeinanderfolgenden und beispielsweise in einem zentralen Bereich vom jeweiligen Mantel 34 durchsetzten, plattenartigen Wärmeübertragungsabschnitten 40 umfasst. Die in der Richtung der Heizeinheit-Längsachsen H aufeinanderfolgenden Wärmeübertragungsabschnitte 40 sind in krümmungsartigen Verbindungsbereichen 42 miteinander verbunden. Die Wärmeübertragungsformationen 38 können mit dem diese jeweils durchsetzenden Mantel 34 beispielsweise durch Presspassung oder Aufschrumpfen verbunden sein oder/und können an diesen materialschlüssig, beispielsweise durch Verlöten oder dergleichen, angebunden sein.

Jede der Heizeinheiten 32 weist einen in Fig. 1 oben liegenden ersten Heizeinheit-Längsendbereich 44 und einen in Fig. 1 unten liegend dargestellten zweiten Heizeinheit-Längsendbereich 46 auf. In ihren ersten Heizeinheit-Längsendbereichen 44 sind die Heizeinheiten 32 über ein im Wesentlichen U-förmig ausgestaltetes und beispielsweise aus Blechmaterial gebogenes erstes Trägerelement 48 an das Heizeinheitgehäuse 16 angebunden. Gleichermaßen sind in ihren zweiten Heizeinheit-Längsendbereichen 46 die Heizeinheiten 32 über ein beispielsweise ebenfalls aus Blechmaterial gebogenes, U-förmiges zweites Trägerelement 50 an das Heizeinheitgehäuse 16 im Heizeinheitaufnahmebereich 22 angebunden. Die beiden Trägerelemente 48, 50 bilden zusammen eine Trägerstruktur 52, vermittels welcher die Heizeinheiten 32 am Heizeinheitgehäuse 16 getragen sind. Dabei sind bei der in Fig. 1 dargestellten Ausgestaltung die Heizeinheiten 32 derart angeordnet, dass deren Heizeinheit-Längsachsen H zueinander parallel und in einer zur Gehäuse-Längsachse G im Wesentlichen orthogonalen Ebene liegen. Die insgesamt sechs Heizeinheiten 32 belegen somit im Wesentlichen den gesamten von Abgas durchströmbaren Querschnitt des Heizeinheitgehäuses 16 im Heizeinheitaufnahmebereich 22, so dass eine effiziente thermische Wechselwirkung zwischen dem Abgas und den Heizeinheiten 32 erreicht ist.

Jedes der beiden U-förmigen Trägerelemente 48, 50 der Trägerstruktur 52 weist einen an der Innenoberfläche des Heizeinheitgehäuses 16 beispielsweise durch Materialschluss, wie z. B. Verlöten oder Verschweißen, festgelegten ersten U-Schenkel 54, 56 auf, sowie einen durch einen jeweiligen Verbindungssteg 58, 60 mit dem ersten U-Schenkel 54, 56 verbundenen zweiten U-Schenkel 62, 64. In den zweiten U-Schenkeln 62, 64 der Trägerelemente 48, 50 sind beispielsweise durch Durchzüge bereitgestellte Trägerelement-Durchgangsöffnungen 66, 68 gebildet, durch welche die Heizelemente 32 sich mit ihrem jeweiligen Mantel 34 hindurch erstrecken, so dass im Bereich ihrer ersten Heizeinheit-Längsendbereiche 44 und ihrer zweiten Heizeinheit-Längsendbereiche 46 die Heizeinheiten 32 an den Trägerelementen 48, 50 und vermittels diesen am Heizeinheitgehäuse 16 getragen sind.

In von den U-Schenkeln 54, 62 bzw. 56, 64 und den Verbindungsstegen 58, 60 umgrenzten Trägerelement-Innenräumen sind die Heizeinheiten 32 miteinander elektrisch leitend verbunden. Hierzu können plattenartige Verbindungselemente 70 z.B. aus Blechmaterial verwendet werden, die an die Heizleiterelemente 36 der miteinander elektrisch leitend zu verbindenden Heizelemente 32 beispielsweise durch Materialschluss, wie z. B. Anlöten, angebunden werden. Bei der in Fig. 1 dargestellten Ausgestaltung sind die sechs nebeneinander liegenden Heizeinheiten 32 seriell miteinander verbunden. Die beiden äußersten Heizeinheiten 32 sind über jeweilige Durchführungen 72, 74 an einer außerhalb des Heizeinheitgehäuses 16 liegende Spannungsquelle angeschlossen, und die zwischen den beiden äußersten Heizeinheiten 32 liegenden Heizeinheiten 32 sind alternierend in ihrem ersten Heizeinheit-Längsendbereich 44 und ihrem zweiten Heizeinheit-Längsendbereich 46 mit einer unmittelbar benachbarten Heizeinheit 32 durch eines der Verbindungselemente 70 elektrisch leitend verbunden, so dass sich die serielle Schaltung der Heizeinheiten 32 ergibt.

In den Fig. 1 und 2 ist zu erkennen, dass die Trägerelemente 48, 50 so im Heizeinheitgehäuse 16 angeordnet sind, dass deren Verbindungsstege 58, 60 jeweils in Richtung stromaufwärts, also zur Anströmseite 18 hin orientiert liegen. Somit sind die Bereiche, in welchen die Heizeinheiten 32 durch die Verbindungselemente 70 elektrisch leitend miteinander verbunden sind, gegen die direkte Anströmung mit Abgas abgeschirmt und somit vor übermäßiger Erwärmung geschützt. Ferner blockieren die Trägerelemente 48, 50 in den ersten und zweiten Heizeinheit-Längsendbereichen 44, 46 den Strömungsweg, so dass das auf die Heizeinheiten 32 in einer Abgas-Hauptströmungsrichtung A zu strömende Abgas dazu gezwungen wird, diese im Bereich der Wärmeübertragungsformation 38 zu umströmen.

In den Bereichen, in welchen die Heizeinheiten 32 in ihren ersten Heizeinheit-Längsendbereichen 44 den zweiten U-Schenkel 62 des ersten Trägerelements 48 durchsetzen, können die Heizeinheiten 32 mit ihrem jeweiligen Mantel 34 am zweiten U-Schenkel 62 durch Materialschluss, beispielsweise durch Verlöten, festgelegt sein. Gleichermaßen können in ihren zweiten Heizeinheit-Längsendbereichen 46 die Heizeinheiten 32 am zweiten U-Schenkel 64 des zweiten Trägerelements 50 durch Materialschluss, beispielsweise durch Verlöten, festgelegt sein. Die beiden Trägerelemente 48, 50 selbst sind in Richtung der Heizeinheit-Längsachsen H der Heizeinheiten 32 flexibel, also verformbar, so dass eine bei Erwärmung bzw. Abkühlung auftretende Längenänderung D der Heizeinheiten 32 durch die Flexibilität, also die elastische Verformung der Trägerelemente 48, 50 aufgenommen werden kann, da die Heizeinheiten 32 in ihren ersten und zweiten Heizeinheit-Längsendbereichen 44, 56 an der Trägerstruktur 52 in der Heizeinheit-Längsrichtung H bewegbar getragen sind, insbesondere zusammen mit dem jeweiligen zweiten U-Schenkel 62 bzw. 64 in Richtung der Heizeinheit-Längsachsen H bewegbar getragen sind. Eine übermäßige Belastung der Verbindungsbereiche der Heizeinheiten 32 mit den Trägerelementen 48, 50 bei der im Betrieb wiederholt auftretenden Ausdehnung bzw. Kontraktion der Heizeinheiten 32 in Richtung ihrer Heizeinheit-Längsachsen H wird damit vermieden.

Durch die Auswahl des Materials bzw. auch die Formgebung der Trägerelemente 48, 50 können diese auch auf die Masse der Heizeinheiten 32 derart abgestimmt werden, dass im Betrieb eine Schwingungsanregung vermieden werden kann. Weiterhin kann die elastische Verformbarkeit der Trägerelemente 48, 50 in Richtung der Heizeinheit-Längsachsen H so gewählt werden, dass insbesondere bei einer im Heizbetrieb auftretenden Erwärmung der Heizeinheiten 32 und damit der Ausdehnung derselben in Richtung der Heizeinheit-Längsachsen H eine seitliche Ausweichbewegung der grundsätzlich in Richtung der Heizeinheit-Längsachsen H im Wesentlichen geradlinig sich erstreckenden Heizeinheiten 32 vermieden wird und somit auch ein gegenseitiger Kontakt einander unmittelbar benachbarter Heizeinheiten 32 vermieden wird.

Bei einer alternativen Ausgestaltungsart können die Heizeinheiten 32 mit ihrem jeweiligen Mantel 34 in den Trägerelement-Durchgangsöffnungen 66, 68 bzw. den im Bereich dieser Trägerelement-Durchgangsöffnungen 66, 68 gebildeten Durchzügen durch Presspassung gehalten werden. Diese Presspassung kann so fest sein, dass dadurch eine feste Verbindung mit den Trägerelementen 48, 50 entsteht und somit die Heizeinheiten 32 in ihren ersten und zweiten Heizeinheit-Längsendbereichen 44, 46 sich zusammen mit den jeweiligen zweiten U-Schenkeln 62, 64 der Trägerelemente 48, 50 in Richtung der Heizeinheit-Längsachsen H bewegen können.

Bei einer weiteren alternativen Ausgestaltung können die Heizeinheiten 32 in ihren ersten und zweiten Heizeinheit-Längsenden 44, 46 in den Trägerelement-Durchgangsöffnungen 66, 68 in Richtung der Heizeinheit-Längsachsen H bewegbar getragen sein. Bei dieser Ausgestaltung können die Trägerelemente 48, 50 also im Wesentlichen starr ausgebildet sein, so dass die Bewegbarkeit der Heizeinheiten 32 in ihren jeweiligen Heizeinheit-Längsendbereichen 44, 46 dadurch gewährleistet ist, dass die Heizeinheit-Längsendbereiche 44, 46 in den jeweiligen zweiten U-Schenkeln 62, 64 bzw. den darin gebildeten Trägerelement-Durchgangsöffnungen 66, 68 sich in Richtung der Heizeinheit-Längsachsen H verschieben können. Auch bei dieser Ausgestaltung können für eine grundsätzlich definierte Halterung die Mäntel 34 der Heizeinheiten 32 unter Erzeugung eines Reibschlusses in den jeweiligen Trägerelement-Durchgangsöffnungen 66, 68 gehalten sein, wobei dieser Reibschluss grundsätzlich so gestaltet ist, dass eine Relativbewegung zwischen den Heizeinheit-Längsendbereichen 44, 46 und den zweiten U-Schenkeln 62, 64 bei thermischer Ausdehnung oder Kontraktion der Heizeinheiten 32 auftreten kann.

Durch diese Relativbewegbarkeit der Heizeinheiten 32 bezüglich der Trägerelemente 48, 50 wird grundsätzlich auch eine derartige Bewegungsentkopplung der Heizeinheiten 32 von den Trägerelementen 48, 50 erreicht, dass bei Auftreten von Schwingungen in einer Abgasanlage eine Schwingungsanregung der Heizeinheiten 32 mit ihrer Eigenfrequenz nicht erfolgen kann.

Die verschiedenen vorangehend beschriebenen Anbindungsarten der Heizeinheiten 32 an die Trägerelemente 48, 50 können grundsätzlich miteinander kombiniert werden. So können die Heizeinheiten 32 in ihren ersten Heizeinheit-Längsendbereichen 44 und ihren zweiten Längsendbereichen 46 jeweils in gleicher Art und Weise an die Trägerelemente 48, 50 bzw. deren zweite U-Schenkel 62, 64 angebunden werden. Alternativ ist es möglich, beispielsweise in einem der Heizeinheit-Längsendbereiche 44, 46 eine feste Anbindung, beispielsweise durch Materialschluss oder durch eine feste Presspassung zu erzeugen, während im anderen der beiden Heizeinheit-Längsendbereiche 44, 46 die Heizeinheiten 32 in den jeweils zugeordneten Trägerelement-Durchgangsöffnungen 66 bzw. 68 verschiebbar aufgenommen sein können. Zur Vermeidung von Schwingungsanregungen ist es jedoch voreilhaft, wenn in beiden Heizeinheit-Längsendbereichen 44, 46 die Heizeinheiten 32 in gleicher Art und Weise an die Trägerelemente 48 angebunden sind.

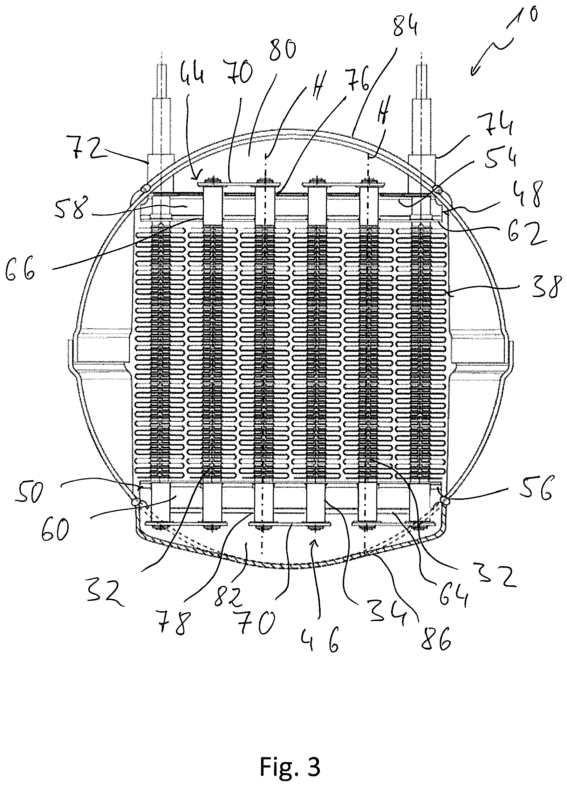

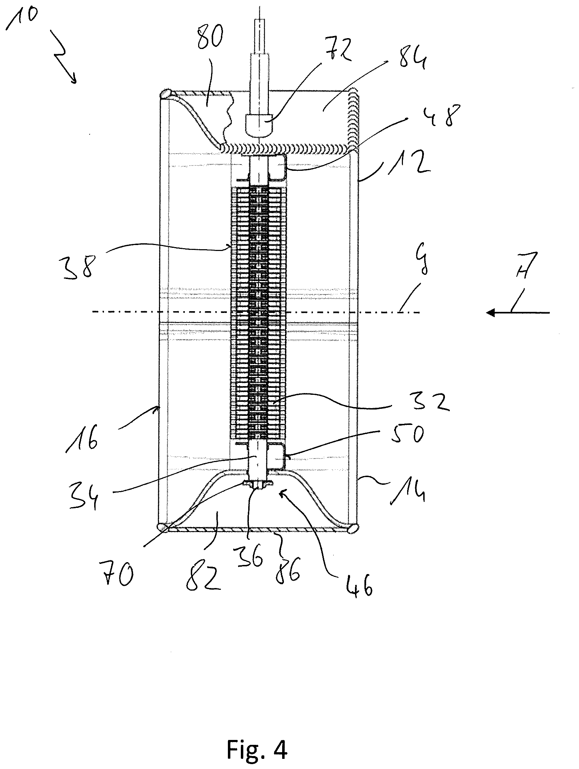

Eine alternative Ausgestaltung einer Abgasheizanordnung 10 ist in den Fig. 3 und 4 dargestellt. Auch bei dieser Ausgestaltungsform sind im HeizeinheitAufnahmebereich 22 des Heizeinheitgehäuses 16 mehrere Heizeinheiten 32 quer zur Gehäuse-Längsachse G nebeneinander angeordnet, so dass deren Heizeinheit-Längsachsen H wiederum zueinander im Wesentlichen parallel und in einer zur Gehäuse-Längsachse G im Wesentlichen orthogonalen Ebene liegen, welche der Zeichenebene der Fig. 3 entsprechen kann.

Die Heizeinheiten 32 sind mit ihren ersten und zweiten Heizeinheit-Längsendbereichen 44, 46 in der vorangehend beschriebenen Art und Weise an den Trägerelementen 48, 50 bzw. deren zweiten U-Schenkeln 62, 64 derart getragen, dass die Heizeinheit-Längsendbereiche 44, 46 bei thermisch induzierter Längenänderung sich in Richtung der Heizeinheit-Längsachsen H bewegen können.

Die Heizeinheiten 32 durchsetzen mit ihren ersten und zweiten Heizeinheit-Längsendbereichen 44, 46 zusätzlich auch im Heizeinheitgehäuse 16 im Heizeinheitaufnahmebereich 22 vorgesehene Gehäuse-Durchgangsöffnungen 76, 78. Die Heizeinheiten 32 können bei thermisch induzierter Längenänderung sich somit im Bereich der Gehäuse-Durchgangsöffnungen 76, 78 bewegen. Um dabei eine Abgasleckage im Bereich der Gehäuse-Durchgangsöffnungen 76, 78 zu vermeiden, sind ein an der Außenseite des Heizeinheitgehäuses 16 gebildeter erster Heizeinheit-Verbindungsraum 80, in welchem die Heizeinheiten 32 in ihren ersten Heizeinheit-Längsendbereichen 44 miteinander leitend verbunden sind, und ein zweiter Heizeinheit-Verbindungsraum 82, in welchem die Heizeinheiten 32 in ihren zweiten Heizeinheit-Längsendbereichen 46 miteinander elektrisch leitend verbunden sind, durch ein jeweiliges im Wesentlichen gekrümmtes, deckelartiges Abdeckelement 84, 86 gasdicht abgeschlossen. Die Abdeckelemente 84, 86 können an das Heizeinheitgehäuse 16 durch Materialschluss, beispielsweise Verlöten oder Verschweißen, angebunden sein. Die für den Anschluss der Heizeinheiten 32 an die außerhalb des Heizeinheitgehäuses 16 liegende Spannungsquelle erforderlichen Durchführungen 72, 74, an welche die beiden äußersten Heizeinheiten 32 elektrisch leitend angeschlossen sind, durchsetzen dabei auch das Abdeckelement 84 und sind bezüglich diesem gasdicht abgeschlossen.

Auch bei der in den Fig. 3 und 4 dargestellten Ausgestaltungsform sind insgesamt sechs Heizeinheiten 32 zueinander seriell geschaltet, wobei die Verbindungselemente 70 nunmehr außerhalb des Heizeinheitgehäuses 16 positioniert sind, so dass die Bereiche, in welchen die Verbindungselemente 70 an die Heizleiterelemente 36 der verschiedenen Heizeinheiten 32 angebunden sind, gegen die Anströmung mit Abgas abgeschirmt und somit vor thermischer Überlastung geschützt sind.

Die Ausgestaltungsform der Fig. 3 und 4 könnte auch mit der Ausgestaltungsform der Fig. 1 und 2 kombiniert werden. So können beispielsweise die Heizeinheiten und 32 mit ihren ersten Heizeinheit-Längsendbereichen 44 in der in den Fig. 1 und 2 dargestellten Art und Weise in die Abgasheizanordnung 10 integriert sein, während in ihren zweiten Heizeinheit-Längsendbereichen 46 die Heizeinheiten 32 in der in den Fig. 3 und 4 dargestellten Art und Weise in die Abgasheizanordnung 10 integriert sein können. Auch die umgekehrte Anordnung ist möglich.

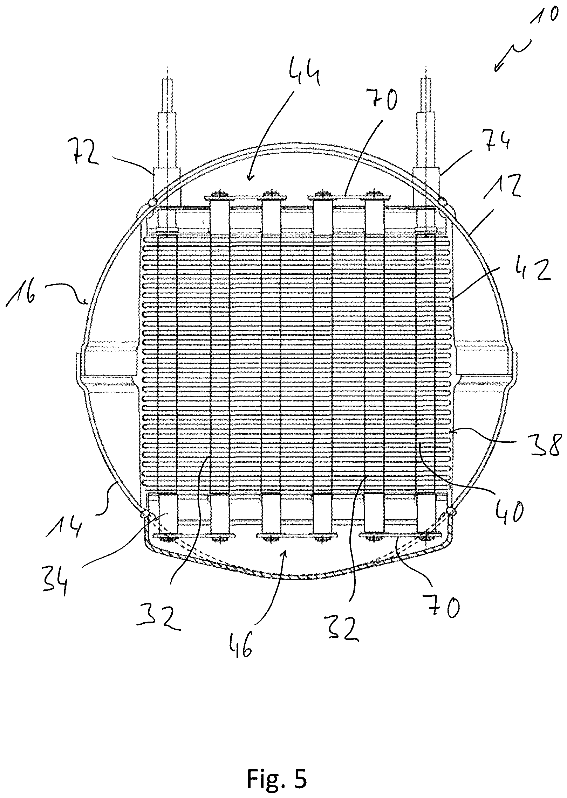

Eine weitere alternative Ausgestaltungsform einer Abgasheizanordnung 10 ist in Fig. 5 dargestellt. Diese entspricht grundsätzlich dem in den Fig. 3 und 4 dargestellten Ausgestaltungsprinzip und unterscheidet sich davon insofern, als die Mäntel 34 mehrerer, im dargestellten Ausgestaltungsbeispiel aller Heizeinheiten 32 mit derselben Wärmeübertragungsformation 38 zusammenwirken. Diese erstreckt sich quer zur Gehäuse-Längsachse G und der in Richtung der Gehäuselängsachse G im Wesentlichen orientierten Abgas-Hauptströmungsrichtung A über alle Heizeinheiten 32 hinweg und ist somit in Kontakt mit den Mänteln 34 aller Heizeinheiten 32. Auch diese Wärmeübertragungsformation 38 weist grundsätzlich die vorangehend beschriebene mäanderartige Struktur mit den zueinander im Wesentlichen parallelen, plattenartigen Wärmeübertragungsabschnitten 40 und den diese verbindenden Verbindungsabschnitten 42 auf.

Es ist darauf hinzuweisen, dass bei dieser bzw. auch den vorangehend beschriebenen Ausgestaltungsformen, bei welchen jede Heizeinheit 32 eine dieser ausschließlich zugeordnete Wärmeübertragungsformation 38 aufweist, eine jeweilige Wärmeübertragungsformation 38 auch in anderer Weise strukturiert sein kann. So können beispielsweise mehrere voneinander separat aufgebaute, plattenartige Wärmeübertragungsabschnitte am jeweiligen Mantel 34 vorgesehen sein. Grundsätzlich könnte eine derartige Wärmeübertragungsformation 38 auch eine einen jeweiligen Mantel 34 schraubenartig gewunden umgebende Struktur aufweisen.

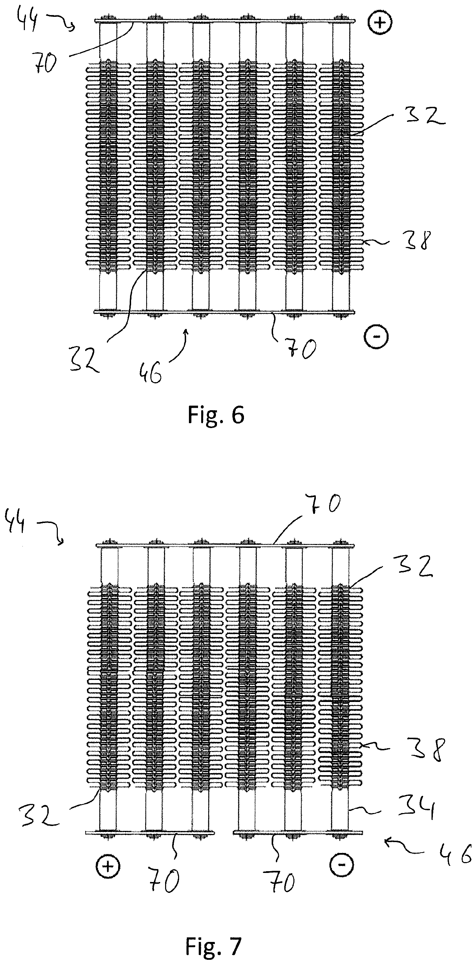

Die Fig. 6 bis 9 stellen verschiedene Schaltungsbeispiele für die elektrische Schaltung der im Heizeinheitgehäuse 16 vorgesehenen Heizeinheiten 32 dar. Bei der in Fig. 6 dargestellten Schaltung sind alle Heizeinheiten 32 zueinander parallel geschaltet. Alle Heizeinheiten 32 sind in ihren ersten Heizeinheit-Längsendbereichen 44 und ihren zweiten Heizeinheit-Längsendbereichen 46 miteinander durch ein jeweiliges Verbindungselement 70 leitend verbunden. Die beiden Durchführungen 72, 74, mit welchen die Heizeinheiten 32 an eine Spannungsquelle angeschlossen werden können, können bei dieser Ausgestaltung an einander gegenüberliegenden Bereichen des Heizeinheitgehäuses sich voneinander weg erstreckend angeordnet sein. Die in Fig. 6 dargestellte Ausgestaltung führt bei Einsatz im Zusammenhang mit einem Bordspannungssystem, welches eine Spannung von 12 V liefert, dazu, dass in jeder der zueinander im Wesentlichen identisch aufgebauten Heizeinheiten 32 ein Spannungsabfall im Bereich von 12 V auftreten kann.

Die Fig. 7 zeigt ein Ausgestaltungsbeispiel, bei welchem jeweils drei einander benachbarte Heizeinheiten 32 zueinander parallel geschaltet sind und die beiden Pakete von jeweils drei zueinander parallel geschalteten Heizeinheiten 32 zueinander seriell geschaltet sind. Ein derartiger Aufbau kann beispielsweise eingesetzt werden, wenn ein Bordspannungssystem eine Spannung von 24 V liefert, wobei auch dann in diesem Falle in jeder der zueinander im Wesentlichen identisch aufgebauten Heizeinheiten 32 ein Spannungsabfall von etwa 12 V auftreten wird.

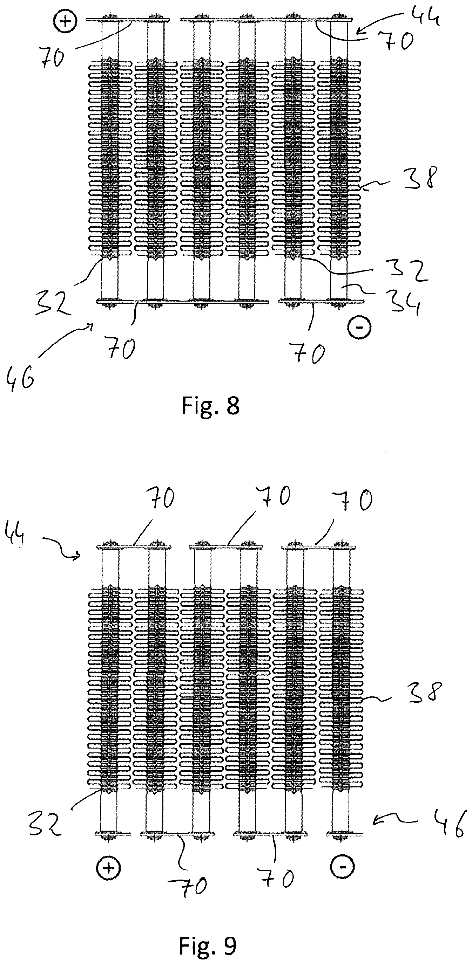

Die Fig. 8 zeigt ein Ausgestaltungsbeispiel, in welchem drei Pakete von jeweils zwei einander unmittelbar benachbarten und parallel geschalteten Heizeinheiten 32 zueinander seriell geschaltet sind. Bei Einsatz in Verbindung mit einem Bordspannungssystem, welches eine Bordspannung von 36 V liefern kann, wird auch bei dieser Schaltung in jeder der zueinander im Wesentlichen identisch aufgebauten Heizeinheiten 32 ein Spannungsabfall von etwa 12 V auftreten.

Die Fig. 9 zeigt die vorangehend mit Bezug auf die in Fig. 1 bis 5 beschriebene serielle Schaltung aller Heizeinheiten 32. Bei Einsatz in Verbindung mit einem Bordspannungssystem, welches eine Spannung im Bereich von 72 V liefern kann, fällt auch bei dieser Schaltung in jeder der zueinander im Wesentlichen identisch aufgebauten Heizeinheiten 32 eine Spannung von etwa 12 V ab.

Die vorangehend mit Bezug auf die Fig. 6 bis 9 beschriebenen Beispiele für die parallele bzw. serielle Anordnung verschiedener Heizeinheiten 32 zeigt, dass es möglich ist, in Anpassung an verschiedene Bordspannungssysteme die Heizeinheiten 32 so zu schalten, dass in jeder der Heizeinheiten im Wesentlichen die gleiche Spannung abfällt, so dass in dem gesamten Querschnitt der Abgasheizanordnung 10 ein gleichmäßiger Wärmeeintrag in das die Heizeinheiten 32 umströmende Abgas erreicht wird.

Bei der vorangehend beschriebenen Abgasheizanordnung wird eine effiziente Erwärmung von das Heizeinheitgehäuse durchströmendem Abgas erreicht, ohne dass eine im Heizbetrieb der Abgasheizanordnung durch eine thermische Längenänderung der Heizeinheiten eingeführte übermäßige Belastung derjenigen Bereiche, in welchen die Heizeinheiten bezüglich des Heizeinheitgehäuses getragen sind, auftritt. Die Abgasheizeinheit ermöglicht eine effiziente Erwärmung des die Heizeinheiten umströmenden Abgases, so dass das Abgas insbesondere in einer Startphase des Verbrennungsbetriebs die darin aufgenommene Wärme auf eine stromabwärts positionierte Abgasbehandlungsanordnung, beispielsweise Katalysator bzw. Partikelfilter, übertragen kann, um diese zu erwärmen und somit möglichst schnell in einen Zustand zu bringen, in welchem eine effiziente Behandlung des Abgases und somit eine effiziente Minderung des im Abgas enthaltenen Schadstoffanteils erreicht werden kann.

Durch die Ausgestaltung des Heizeinheitgehäuses mit dem an den Heizeinheitaufnahmebereich sich trichterartig erweiternden stromabwärtigen Anschlussbereich, in welchem ein Übergang in eine runde, beispielsweise kreisrunde oder elliptische Querschnittskontur erreicht wird, kann das Heizeinheitgehäuse in einer Art und Weise in eine Abgasanlage derart integriert werden, dass eine stromabwärts folgende Abgasbehandlungsanordnung leicht angeschlossen werden kann. Beispielsweise kann die Abgasheizeinheit mit dem Heizeinheitgehäuse den Trichterbereich bereitstellen, welcher in einem stromaufwärtigen Teil einer Abgasbehandlungsanordnung im Allgemeinen vorgesehen ist.

## Patentansprüche

1. Abgasheizanordnung für eine Abgasanlage einer Brennkraftmaschine, umfassend ein von Abgas durchströmbares Heizeinheitgehäuse (16) und eine Mehrzahl von in dem Heizeinheitgehäuse (16) angeordneten, in Richtung einer Heizeinheit-Längsachse (H) langgestreckten Heizeinheiten (32) jeweils mit einem ersten Heizeinheit-Längsendbereich (44) und einem zweiten Heizeinheit-Längsendbereich (46), wobei die Heizeinheiten (32) in ihren ersten Heizeinheit-Längsendbereichen (44) und ihren zweiten Heizeinheit-Längsendbereichen (46) vermittels einer Trägerstruktur (52) bezüglich des Heizeinheitgehäuses (16) getragen sind, wobei wenigstens eine Heizeinheit (32) einen in Richtung der Heizeinheit-Längsachse (H) langgestreckten Mantel (34) umfasst, **dadurch gekennzeichnet, dass** die wenigstens eine Heizeinheit (32) mit einem in Richtung der Heizeinheit-Längsachse (H) langgestreckten Mantel (34) in dem Mantel (34) ein Heizleiterelement (36) und an einer Außenseite des Mantels (34) eine Wärmeübertragungsformation (38) umfasst, und dass wenigstens eine Heizeinheit mit einem in Richtung der Heizeinheit-Längsachse (H) langgestreckten Mantel mit ihrem ersten Heizeinheit-Längsendbereich (44) oder/und ihrem zweiten Heizeinheit-Längsendbereich (46) an der Trägerstruktur (52) in der Heizeinheit-Längsrichtung (H) bewegbar getragen ist.

2. Abgasheizanordnung nach Anspruch 1, **dadurch gekennzeichnet, dass** die Trägerstruktur (52) in Zuordnung zu den ersten Heizeinheit-Längsendbereichen (44) ein an dem Heizeinheitgehäuse (16) getragenes, von den Heizeinheiten (32) im Bereich von Trägerelement-Durchgangsöffnungen (66) durchsetztes erstes Trägerelement (48) umfasst, oder/und dass die Trägerstruktur (52) in Zuordnung zu den zweiten Heizeinheit-Längsendbereichen (46) ein an dem Heizeinheitgehäuse (16) getragenes, von den Heizeinheiten (32) im Bereich von Trägerelement-Durchgangsöffnungen (68) durchsetztes zweites Trägerelement (50) umfasst.

3. Abgasheizanordnung nach Anspruch 2, **dadurch gekennzeichnet, dass** wenigstens eine, vorzugsweise jede Heizeinheit (32) in ihrem ersten Heizeinheit-Längsendbereich (44) eine Trägerelement-Durchgangsöffnung (66) derart durchsetzt, dass der erste Heizeinheit-Längsendbereich (44) in Richtung der Heizeinheit-Längsachse (H) bezüglich des ersten Trägerelements (48) bewegbar ist, oder/und dass wenigstens eine, vorzugsweise jede Heizeinheit (32) in ihrem zweiten Heizeinheit-Längsendbereich (46) eine Trägerelement-Durchgangsöffnung (68) derart durchsetzt, dass der zweite Heizeinheit-Längsendbereich (46) in Richtung der Heizeinheit-Längsachse (A) bezüglich des zweiten Trägerelements (50) bewegbar ist.

4. Abgasheizanordnung nach Anspruch 2 oder 3, **dadurch gekennzeichnet, dass** das erste Trägerelement (48) in Richtung der Heizeinheit-Längsachse (H) flexibel ist, und dass wenigstens eine, vorzugsweise jede Heizeinheit (32) in ihrem ersten Heizeinheit-Längsendbereichen (44) an dem ersten Trägerelement (48) festgelegt ist, oder/und dass das zweite Trägerelement (50) in Richtung der Heizeinheit-Längsachse (H) flexibel ist, und dass wenigstens eine, vorzugsweise jede Heizeinheit (32) in ihrem zweiten Heizeinheit-Längsendbereichen (48) an dem zweiten Trägerelement (50) festgelegt ist.

5. Heizanordnung nach einem der Ansprüche 2-4, **dadurch gekennzeichnet, dass** das erste Trägerelement (48) im Wesentlichen U-förmig ausgebildet ist mit zwei U-Schenkeln (54, 62) und einem die beiden U-Schenkel (54, 62) verbindenden Verbindungssteg (58), wobei einer erster U-Schenkel (54) des ersten Trägerelements (68) an dem Heizeinheitgehäuse (16) festgelegt ist und in einem zweiten U-Schenkel (62) des ersten Trägerelements (48) die Trägerelement-Durchgangsöffnungen (66) des ersten Trägerelements (48) vorgesehen sind oder/und wobei der Verbindungssteg (58) des ersten Trägerelements (48) in Richtung zu einer Anströmseite (18) des Heizeinheitgehäuses (16) angeordnet ist, oder/und dass das zweite Trägerelement (50) im Wesentlichen U-förmig ausgebildet ist mit zwei U-Schenkeln (56, 64) und einem die beiden U-Schenkel (56, 64) verbindenden Verbindungssteg (60), wobei einer erster U-Schenkel (56) des zweiten Trägerelements (50) an dem Heizeinheitgehäuse (16) festgelegt ist und in einem zweiten U-Schenkel (64) des zweiten Trägerelements (50) die Trägerelement-Durchgangsöffnungen (68) des zweiten Trägerelements (50) vorgesehen sind oder/und wobei der Verbindungssteg (60) des zweiten Trägerelements (50) in Richtung zu einer Anströmseite (18) des Heizeinheitgehäuses (16) angeordnet ist.

6. Abgasheizanordnung nach einem der vorangehenden Ansprüche, **dadurch gekennzeichnet, dass** wenigstens eine Heizeinheit (32) in ihrem ersten Heizeinheit-Längsendbereich (44) mit wenigstens einer weiteren Heizeinheit (32) in deren ersten Längsendbereich (44) elektrisch leitend verbunden ist oder/und in ihrem zweiten Heizeinheit-Längsendbereich (46) mit wenigstens einer weiteren Heizeinheit (32) in deren zweiten Heizeinheit-Längsendbereich (46) elektrisch leitend verbunden ist.

7. Abgasheizanordnung nach Anspruch 6, **dadurch gekennzeichnet, dass** wenigstens eine Heizeinheit (32) in ihrem ersten Heizeinheit-Längsendbereich (44) mit wenigstens einer weiteren Heizeinheit (32) elektrisch leitend verbunden ist und in ihrem zweiten Heizeinheit-Längsendbereich (46) mit wenigstens einer anderen weiteren Heizeinheit (32) elektrisch leitend verbunden ist.

8. Abgasheizanordnung nach einem der vorangehenden Ansprüche, **dadurch gekennzeichnet, dass** wenigstens zwei, vorzugsweise alle Heizeinheiten (32) elektrisch zueinander parallel geschaltet sind, oder/und dass wenigstens zwei, vorzugsweise alle Heizeinheiten (32) elektrisch zueinander seriell geschaltet sind.

9. Abgasheizanordnung nach einem der Ansprüche 6-8, sofern auf Anspruch 5 rückbezogen, **dadurch gekennzeichnet, dass** wenigstens zwei, vorzugsweise alle Heizeinheiten (32) in ihren ersten Heizeinheit-Längsendbereichen (44) mit wenigstens einer weiteren Heizeinheit (32) in einem von den beiden U-Schenkeln (54, 62) des ersten Trägerelements (48) umgrenzten Trägerelement-Innenraum elektrisch leitend verbunden sind, oder/und dass wenigstens zwei, vorzugsweise alle Heizeinheiten (32) in ihren zweiten Heizeinheit-Längsendbereichen (46) mit wenigstens einer weiteren Heizeinheit (32) in einem von den beiden U-Schenkeln (56, 64) des zweiten Trägerelements (50) umgrenzten Trägerelement-Innenraum elektrisch leitend verbunden sind.

10. Abgasheizanordnung nach einem der Ansprüche 6-9, **dadurch gekennzeichnet, dass** wenigstens zwei, vorzugsweise alle Heizeinheiten (32) in ihren ersten Heizeinheit-Längsendbereichen (44) eine Gehäuse-Durchgangsöffnung (76) des Heizeinheitgehäuses (16) durchsetzen und miteinander oder/und mit wenigstens einer weiteren Heizeinheit (32) an der Außenseite des Heizeinheitgehäuses (16) elektrisch leitend verbunden sind, oder/und dass wenigstens zwei, vorzugsweise alle Heizeinheiten (32) in ihren zweiten Heizeinheit-Längsendbereichen (46) eine Gehäuse-Durchgangsöffnung (78) des Heizeinheitgehäuses (16) durchsetzen und miteinander oder/und mit wenigstens einer weiteren Heizeinheit (32) an der Außenseite des Heizeinheitgehäuses (16) elektrisch leitend verbunden sind.

11. Abgasheizanordnung nach Anspruch 10, **dadurch gekennzeichnet, dass** an der Außenseite des Heizeinheitgehäuses (16) in Zuordnung zu den ersten Heizeinheit-Längsendbereichen (44) ein durch wenigstens ein Abdeckelement (84) im Wesentlichen gasdicht abgeschlossener erster Heizeinheit-Verbindungsraum (80) zur elektrischen Verbindung wenigstens zweier Heizeinheiten (32) in ihren ersten Heizeinheit-Längsendbereichen (44) außerhalb des Heizeinheitgehäuses (16) vorgesehen ist, oder/und dass an der Außenseite des Heizeinheitgehäuses (16) in Zuordnung zu den zweiten Heizeinheit-Längsendbereichen (46) ein durch wenigstens ein Abdeckelement (86) im Wesentlichen gasdicht abgeschlossener zweiter Heizeinheit-Verbindungsraum (82) zur elektrischen Verbindung wenigstens zweier Heizeinheiten (32) in ihren zweiten Heizeinheit-Längsendbereichen (46) außerhalb des Heizeinheitgehäuses (16) vorgesehen ist.

12. Abgasheizanordnung nach einem der vorangehenden Ansprüche, **dadurch gekennzeichnet, dass** wenigstens zwei, vorzugsweise alle Heizeinheiten (32) mit zueinander im Wesentlichen parallelen Heizeinheit-Längsachsen (H) angeordnet sind, oder/und dass wenigstens zwei, vorzugsweise alle Heizeinheiten mit in einer zu einer Gehäuse-Längsachse (G) des Heizeinheitgehäuses (16) im Wesentlichen orthogonalen Ebene liegenden Heizeinheit-Längsachsen (H) angeordnet sind, oder/und dass wenigstens eine, vorzugsweise jede Heizeinheit entlang der Heizeinheit-Längsachse geradlinig langgestreckt ist.

13. Abgasheizanordnung nach einem der vorangehenden Ansprüche, **dadurch gekennzeichnet, dass** das Heizeinheitgehäuse (16) einen Heizeinheitaufnahmebereich (22) mit im Wesentlichen rechteckiger Innenumfangskontur aufweist, wobei die Heizeinheiten (32) im Heizeinheitaufnahmebereich (22) angeordnet sind, und dass das Heizeinheitgehäuse (16) in einem stromaufwärtigen Anschlussbereich (24) eine im Wesentlichen runde Innenumfangskontur aufweist oder/und in einem stromabwärtigen Anschlussbereich (26) eine im Wesentlichen runde Innenumfangskontur aufweist.

14. Abgasheizanordnung nach einem der vorangehenden Ansprüche, **dadurch gekennzeichnet, dass** jede Heizeinheit (32) einen in Richtung der Heizeinheit-Längsachse (H) langgestreckten Mantel (34), in dem Mantel (34) ein Heizleiterelement (36) und an einer Außenseite des Mantels (34) eine Wärmeübertragungsformation (38) umfasst, oder/und dass jede Heizeinheit mit ihrem ersten Heizeinheit-Längsendbereich (44) oder/und ihrem zweiten Heizeinheit-Längsendbereich (46) an der Trägerstruktur (52) in der Heizeinheit-Längsrichtung (H) bewegbar getragen ist.

15. Abgasheizanordnung nach Anspruch 14, **dadurch gekennzeichnet, dass** bei wenigstens einer, vorzugsweise jeder Heizeinheit (32) die Wärmeübertragungsformation (38) eine Mehrzahl von in Richtung der Heizeinheit-Längsachse (H) aufeinanderfolgenden, zueinander im Wesentlichen parallelen Wärmeübertragungsabschnitten (40) umfasst, oder/und dass bei wenigstens einer, vorzugsweise jeder Heizeinheit (32) die Wärmeübertragungsformation (38) mäanderartig ausgebildet ist mit einer Mehrzahl von zueinander im Wesentlichen parallelen, durch Verbindungsabschnitte (42) miteinander verbundenen Wärmeübertragungsabschnitten (40), oder/und dass wenigstens eine Wärmeübertragungsformation (38) an der Außenseite der Mäntel (34) wenigstens zweier Heizeinheiten (32) vorgesehen ist.

16. Abgasanlage für eine Brennkraftmaschine, umfassend wenigstens eine Abgasbehandlungsanordnung, vorzugsweise Katalysator oder/und Partikelfilter, und eine Abgasheizanordnung (10) nach einem der vorangehenden Ansprüche stromaufwärts bezüglich der wenigstens einen Abgasbehandlungsanordnung.

## Claims

1. Exhaust gas heating assembly for an exhaust gas system of an internal combustion engine, comprising a heating unit housing (16) through which exhaust gas can flow and a plurality of heating units (32) arranged in the heating unit housing (16) and elongated in the direction of a heating unit longitudinal axis (H), each having a first heating unit longitudinal end region (44) and a second heating unit longitudinal end region (46), wherein the heating units (32) are supported in their first heating unit longitudinal end regions (44) and their second heating unit longitudinal end regions (46) by means of a support structure (52) with respect to the heating unit housing (16), wherein at least one heating unit (32) comprises a jacket (34) elongated in the direction of the heating unit longitudinal axis (H), **characterized in that** the at least one heating unit (32) with a jacket (34) elongated in the direction of the heating unit longitudinal axis (H) comprises a heating conductor element (36) in the jacket (34) and a heat transfer formation (38) on an outer side of the jacket (34), and **in that** at least one heating unit with a jacket elongated in the direction of the longitudinal axis (H) of the heating unit is supported on the support structure (52) with its first longitudinal end region (44) of the heating unit and/or its second longitudinal end region (46) of the heating unit so as to be movable in the longitudinal direction (H) of the heating unit.

2. Exhaust gas heating assembly as claimed in claim 1, **characterized in that** the support structure (52), in association to the first heating unit longitudinal end regions (44), comprises a first support element (48) which is supported on the heating unit housing (16) and in the region of support element passage openings (66) is penetrated by the heating units (32), or/and **in that** the support structure (52), in association to the second heating unit longitudinal end regions (46), comprises a second support element (50) which is supported on the heating unit housing (16) and in the region of support element passage openings (68) is penetrated by the heating units (32).

3. Exhaust gas heating assembly as claimed in claim 2, **characterized in that** at least one, preferably each, heating unit (32) in its first heating unit longitudinal end region (44) penetrates a support element passage opening (66) in such a manner that the first heating unit longitudinal end region (44) in relation to the first support element (48) is movable in the direction of the heating unit longitudinal axis (H), or/and **in that** at least one, preferably each, heating unit (32) in the second heating unit longitudinal end region (46) thereof penetrates a support element passage opening (68) in such a manner that the second heating unit longitudinal end region (46) in relation to the second support element (50) is movable in the direction of the heating unit longitudinal axis (A).

4. Exhaust gas heating assembly as claimed in claim 2 or 3, **characterized in that** the first support element (48) is flexible in the direction of the heating unit longitudinal axis (H), and that at least one, preferably each, heating unit (32) in the first heating unit longitudinal end regions (44) thereof is fixed to the first support element (48), or/and **in that** the second support element (50) is flexible in the direction of the heating unit longitudinal axis (H), and that at least one, preferably each, heating unit (32) in the second heating unit longitudinal end regions (48) thereof is established on the second support element (50).

5. Exhaust gas heating assembly as claimed in one of claims 2 to 4, **characterized in that** the first support element (48) is configured so as to be substantially U-shaped, having two U-legs (54, 62) and a connecting web (58) that connects the two U-legs (54, 56), wherein a first U-leg (54) of the first support element (68) is fixed to the heating unit housing (16) and the support element passage openings (66) of the first support element (48) are provided in a second U-leg (62) of the first support element (48), or/and wherein the connecting web (58) of the first support element (48) is disposed in the direction toward an inflow side (18) of the heating unit housing (16), or/and that the second support element (50) is configured so as to be substantially U-shaped, having two U-legs (56, 64) and a connecting web (60) that connects the two U-legs (56, 64), wherein a first U-leg (56) of the second support element (50) is fixed to the heating unit housing (16) and the support element passage openings (68) of the second support element (50) are provided in a second U-leg (64) of the second support element (50), or/and wherein the connecting web (60) of the second support element (50) is disposed in a direction toward an inflow side (18) of the heating unit housing (16).

6. Exhaust gas heating assembly as claimed in one of the preceding claims, **characterized in that** at least one heating unit (32) in the first heating unit longitudinal end region (44) thereof is connected in an electrically conducting manner to at least one further heating unit (32) in the first longitudinal end region (44) of the latter, or/and in the second heating unit longitudinal end region (46) thereof is connected in an electrically conducting manner to at least one further heating unit (32) in the second heating unit longitudinal end region (46) of the latter.

7. Exhaust gas heating assembly as claimed in claim 6, **characterized in that** at least one heating unit (32) in the first heating unit longitudinal end region (44) thereof is connected in an electrically conducting manner to at least one further heating unit (32), and in the second heating unit longitudinal end region (46) thereof is connected in an electrically conducting manner to at least one other further heating unit (32).

8. Exhaust gas heating assembly as claimed in one of the preceding claims, **characterized in that** at least two, preferably all, heating units (32) are electrically mutually switched in parallel, or/and **in that** at least two, preferably all, heating units (32) are electrically mutually switched in series.

9. Exhaust gas heating assembly as claimed in one of claims 6 to 8, insofar as referring back to claim 5, **characterized in that** at least two, preferably all, heating units (32) in the first heating unit longitudinal end regions (44) thereof, in a support element interior space which is delimited by the two U-legs (54, 62) of the first support element (48), are connected in an electrically conducting manner to at least one further heating unit (32), or/and **in that** at least two, preferably all, heating units (32) in the second heating unit longitudinal end regions (46) thereof, in a support element interior space which is delimited by the two U-legs (56, 64) of the second support element (50), are connected in an electrically conducting manner to at least one further heating unit (32).

10. Exhaust gas heating assembly as claimed in one of claims 6 to 9, **characterized in that** at least two, preferably all heating units (32), in the first heating unit longitudinal end regions (44) thereof penetrate a housing passage opening (76) of the heating unit housing (16) and on the external side of the heating unit housing (16) are connected in an electrically conducting manner to one another or/and to at least one further heating unit (32), or/and **in that** at least two, preferably all, heating units (32) in the second heating unit longitudinal end regions (46) thereof penetrate a housing passage opening (78) of the heating unit housing (16) and on the external side of the heating unit housing (16) are connected in an electrically conducting manner to one another or/and to at least one further heating unit (32).

11. Exhaust gas heating assembly as claimed in claim 10, **characterized in that** on the external side of the heating unit housing (16), in association to the first heating unit longitudinal end regions (44), a first heating unit connection space (80) which for electrically connecting at least two heating units (32) in the first heating unit longitudinal regions (44) thereof outside the heating unit housing (16) is sealed in a substantially gas-tight manner by a cover element (84) is provided, or/and **in that** on the external side of the heating unit housing (16), in association to the second heating unit longitudinal end regions (46), a second heating unit connection space (82) which for electrically connecting at least two heating units (32) in the second heating unit longitudinal end regions (46) thereof outside the heating unit housing (16), sealed in a substantially gas-tight manner by at least one cover element (86), is provided.

12. Exhaust gas heating assembly as claimed in one of the preceding claims, **characterized in that** at least two, preferably all heating units (32), are disposed with heating unit longitudinal axes (H) that are substantially mutually parallel, or/and **in that** at least two, preferably all, heating units are disposed with heating unit longitudinal axes (H) which lie in a plane that is substantially orthogonal to a housing longitudinal axis (G) of the heating unit housing (16), or/and **in that** at least one, preferably each, heating unit is elongate in a rectilinear manner along the heating unit longitudinal axis.

13. Exhaust gas heating assembly as claimed in one of the preceding claims, **characterized in that** the heating unit housing (16) has a heating unit receptacle region (22) having a substantially rectangular internal circumferential contour, wherein the heating units (32) are disposed in the heating unit receptacle region (22), and wherein the heating unit housing (16) in an upstream connector region (24) has a substantially round internal circumferential contour, or/and in a downstream connector region (26) has a substantially round internal circumferential contour.

14. Exhaust gas heating assembly as claimed in one of the preceding claims, **characterized in that** each heating unit (32) comprises a jacket (34) that is elongate in the direction of the heating unit longitudinal axis (H) and in the jacket (34) comprises a heat conductor element (36) and on an external side of the jacket (34) comprises a heat transmission formation (38) or/and that each heating unit is supported with its first heating unit longitudinal end region (44) or/and in its second heating unit longitudinal end region (46) on the support structure (52) so as to be movable in the heating unit longitudinal direction (H).

15. Exhaust gas heating assembly as claimed in claim 14, **characterized in that** in at least one, preferably each, heating unit (32) the heat transmission formation (38) has a plurality of heat transmission portions (40) which are successive in the direction of the heating unit longitudinal axis (H) and are substantially mutually parallel, or/and in that in at least one, preferably each, heating unit (32) the heat transmission formation (38) is configured in a meandering manner, having a plurality of heat transmission portions (40) which are substantially mutually parallel and connected to one another by connection portions (42), or/and **in that** at least one heat transmission formation (38) is provided on the external side of the jackets (34) of at least two heating units (32).

16. Exhaust gas system for an internal combustion engine, comprising at least one exhaust gas treatment assembly, preferably a catalytic converter or/and a particle filter, and an exhaust gas heating assembly (10), as claimed in one of the preceding claims, which is upstream of the at least one exhaust gas treatment assembly.

## Revendications

1. Dispositif de chauffage des gaz d'échappement pour un système de gaz d'échappement d'un moteur à combustion interne, comprenant un boîtier d'unité de chauffage (16) à travers lequel les gaz d'échappement peuvent circuler et une pluralité d'unités de chauffage (32) disposées dans le boîtier d'unité de chauffage (16) et allongées dans la direction d'un axe longitudinal d'unité de chauffage (H), ayant respectivement une première zone d'extrémité longitudinale d'unité de chauffage (44) et une deuxième zone d'extrémité longitudinale d'unité de chauffage (46), dans lequel les unités de chauffage (32) sont soutenues dans leurs premières zones d'extrémité longitudinale d'unité de chauffage (44) et leur deuxième zone d'extrémité longitudinale d'unité de chauffage (46) au moyen d'une structure de support (52) par rapport au boîtier d'unité de chauffage (16), dans lequel au moins une unité de chauffage (32) comprend une enveloppe (34) allongée dans la direction de l'axe longitudinal d'unité de chauffage (H), **caractérisée en ce que** ledit au moins une unité de chauffage (32) avec une enveloppe (34) allongée dans la direction de l'axe longitudinal d'unité de chauffage (H) comprend un élément conducteur de chauffage (36) dans l'enveloppe (34) et une formation de transmission de chaleur (38) sur un côté extérieur de l'enveloppe (34), et **en ce qu'**au moins une unité de chauffage avec une enveloppe allongée dans la direction de l'axe longitudinal d'unité de chauffage (H) est supportée sur la structure de support (52) avec sa première zone d'extrémité longitudinale d'unité de chauffage (44) et/ou sa deuxième zone d'extrémité longitudinale d'unité de chauffage (46) de manière à être mobile dans la direction longitudinale d'unité de chauffage (H).

2. Dispositif de chauffage des gaz d'échappement selon la revendication 1, **caractérisé en ce que** la structure de support (52), en association aux premières zones d'extrémité longitudinale d'unité de chauffage (44), comprend un premier élément de support (48) qui est supporté sur le boîtier d'unité de chauffage (16) et dans la zone des ouvertures de passage d'élément de support (66) est traversé par les unités de chauffage (32), ou/et **en ce que** la structure de support (52), en association aux deuxièmes zones d'extrémité longitudinale d'unité de chauffage (46), comprend un deuxième élément de support (50) qui est supporté par le boîtier d'unité de chauffage (16) et qui est traversé par les unités de chauffage (32) dans la zone des ouvertures de passage d'élément de support (68).

3. Dispositif de chauffage des gaz d'échappement selon la revendication 2, **caractérisé en ce qu'**au moins une, de préférence chaque, unité de chauffage (32) dans sa première zone d'extrémité longitudinale d'unité de chauffage (44) traverse une ouverture de passage d'élément de support (66) de telle manière que la première zone d'extrémité longitudinale d'unité de chauffage (44) par rapport au premier élément de support (48) est mobile dans la direction de l'axe longitudinal d'unité de chauffage (H), ou/et **en ce qu'**au moins une, de préférence chaque, unité de chauffage (32) dans sa deuxième zone d'extrémité longitudinale d'unité de chauffage (46) traverse une ouverture de passage d'élément de support (68) de telle sorte que la deuxième zone d'extrémité longitudinale d'unité de chauffage (46) par rapport au deuxième élément de support (50) est mobile dans la direction de l'axe longitudinal d'unité de chauffage (A).

4. Dispositif de chauffage des gaz d'échappement selon la revendication 2 ou 3, **caractérisé en ce que** le premier élément de support (48) est flexible dans la direction de l'axe longitudinal d'unité de chauffage (H), et **en ce qu'**au moins une, de préférence chaque, unité de chauffage (32) dans ses premières zones d'extrémité longitudinale d'unité de chauffage (44) est fixée sur le premier élément de support (48), ou/et **en ce que** le deuxième élément de support (50) est flexible dans la direction de l'axe longitudinal d'unité de chauffage (H), et **en ce qu'**au moins une, de préférence chaque, unité de chauffage (32) dans ses deuxièmes zones d'extrémité longitudinale d'unité de chauffage (48) est fixée au deuxième élément de support (50).

5. Dispositif de chauffage des gaz d'échappement selon l'une des revendications 2 à 4, **caractérisé en ce que** le premier élément de support (48) est configuré de manière à être essentiellement en forme de U, avec deux branches en U (54, 62) et une bande de connexion (58) qui relie les deux branches en U (54, 56), dans lequel une première branche en U (54) du premier élément de support (68) est fixé au boîtier d'unité de chauffage (16) et les ouvertures de passage d'élément de support (66) du premier élément de support (48) sont prévues dans une deuxième branche en U (62) du premier élément de support (48), ou/et **en ce que** la bande de connexion (58) du premier élément de support (48) est disposée en direction d'un côté d'entrée (18) du boîtier d'unité de chauffage (16), ou/et **en ce que** le deuxième élément de support (50) est configuré de manière à être essentiellement en forme de U, avec deux branches en U (56, 64) et une bande de connexion (60) qui relie les deux branches en U (56, 64), dans lequel une première branche en U (56) du deuxième élément de support (50) est fixée au boîtier d'unité de chauffage (16) et les ouvertures de passage d'élément de support (68) du deuxième élément de support (50) sont prévues dans une deuxième branche en U (64) du deuxième élément de support (50), ou/et dans lequel la bande de connexion (60) du deuxième élément de support (50) est disposée dans une direction vers un côté d'entrée (18) du boîtier d'unité de chauffage (16).

6. Dispositif de chauffage des gaz d'échappement selon l'une des revendications précédentes, **caractérisé en ce qu'**au moins une unité de chauffage (32) dans sa première zone d'extrémité longitudinale d'unité de chauffage (44) est connectée de manière électriquement conductrice à au moins une autre unité de chauffage (32) dans la première zone d'extrémité longitudinale (44) de cette dernière, ou/et dans la deuxième zone d'extrémité longitudinale d'unité de chauffage (46) est connectée de manière électriquement conductrice à au moins une autre unité de chauffage (32) dans sa deuxième zone d'extrémité longitudinale (46) d'unité de chauffage.

7. Dispositif de chauffage des gaz d'échappement selon la revendication 6, **caractérisé en ce qu'**au moins une unité de chauffage (32) dans sa première zone d'extrémité longitudinale d'unité de chauffage (44) est connectée de manière électriquement conductrice à au moins une autre unité de chauffage (32), et dans sa deuxième zone d'extrémité longitudinale d'unité de chauffage (46) est connectée de manière électriquement conductrice à au moins encore une autre unité de chauffage (32).

8. Dispositif de chauffage des gaz d'échappement selon l'une des revendications précédentes, **caractérisé en ce qu'**au moins deux, de préférence toutes les unités de chauffage (32) sont commutées électriquement en parallèle, ou/et **en ce qu'**au moins deux, de préférence toutes les unités de chauffage (32) sont commutées électriquement en série.

9. Dispositif de chauffage des gaz d'échappement selon l'une des revendications 6 à 8, dans la mesure où en référence à la revendication 5, **caractérisé en ce qu'**au moins deux, de préférence toutes les unités de chauffage (32) dans leurs premières zones d'extrémité longitudinale d'unité de chauffage (44), dans un espace intérieur de l'élément de support qui est délimité par les deux branches en U (54, 62) du premier élément de support (48), sont connectées d'une manière électriquement conductrice à au moins une autre unité de chauffage (32), ou/et **en ce qu'**au moins deux, de préférence toutes les unités de chauffage (32) dans leurs deuxièmes zones d'extrémité longitudinale d'unité de chauffage (46), dans un espace intérieur de l'élément de support qui est délimité par les deux branches en U (56, 64) du deuxième élément de support (50), sont connectées de manière électriquement conductrice à au moins une autre unité de chauffage (32).

10. Dispositif de chauffage des gaz d'échappement selon l'une des revendications 6 à 9, **caractérisé en ce qu'**au moins deux, de préférence toutes les unités de chauffage (32), dans leurs premières zones d'extrémité longitudinale d'unité de chauffage (44), traversent une ouverture de passage (76) du boîtier d'unité de chauffage (16) et, sur le côté extérieur du boîtier d'unité de chauffage (16), sont connectées de manière électriquement conductrice l'une à l'autre ou/et à au moins une autre unité de chauffage (32), ou/et **en ce qu'**au moins deux, de préférence toutes les unités de chauffage (32) dans leurs deuxièmes zones d'extrémité longitudinale d'unité de chauffage (46) traversent une ouverture de passage (78) du boîtier d'unité de chauffage (16) et sur le côté extérieur du boîtier d'unité de chauffage (16) sont connectées de manière électriquement conductrice l'une à l'autre ou/et à au moins une autre unité de chauffage (32).

11. Dispositif de chauffage des gaz d'échappement selon la revendication 10, **caractérisé en ce que**, sur le côté extérieur du boîtier d'unité de chauffage (16), en association aux premières zones d'extrémité longitudinales d'unité de chauffage (44), un premier espace de connexion d'unité de chauffage (80) qui, pour connecter électriquement au moins deux unités de chauffage (32) dans les premières zones longitudinales d'unité de chauffage (44) à l'extérieur du boîtier d'unité de chauffage (16), scellé de manière essentiellement étanche au gaz par au moins un élément de couverture (84), est prévu, ou/et sur le côté extérieur du boîtier d'unité de chauffage (16), en association aux deuxièmes zones d'extrémité longitudinale d'unité de chauffage (46), un deuxième espace de connexion d'unité de chauffage (82) qui, pour connecter électriquement au moins deux unités de chauffage (32) dans leurs deuxièmes zones d'extrémité longitudinale d'unité de chauffage (46) à l'extérieur du boîtier d'unité de chauffage (16), scellé de manière essentiellement étanche au gaz par au moins un élément de couverture (86), est prévu.

12. Dispositif de chauffage des gaz d'échappement selon l'une des revendications précédentes, **caractérisé en ce qu'**au moins deux, de préférence toutes les unités de chauffage (32), sont disposées avec des axes longitudinaux d'unité de chauffage (H) qui sont essentiellement parallèles entre eux, ou/et **en ce qu'**au moins deux, de préférence toutes les unités de chauffage, sont disposées selon des axes longitudinaux (H) qui se situent dans un plan essentiellement orthogonal à l'axe longitudinal de boîtier (G) du boîtier d'unité de chauffage (16), ou/et **en ce qu'**au moins une, de préférence chaque, unité de chauffage est allongée de manière rectiligne le long de l'axe longitudinal d'unité de chauffage.

13. Dispositif de chauffage des gaz d'échappement selon l'une des revendications précédentes, **caractérisé en ce que** le boîtier d'unité de chauffage (16) présente une zone de réception d'unité de chauffage (22) ayant un contour circonférentiel interne essentiellement rectangulaire, dans lequel les unités de chauffage (32) sont disposées dans la zone de réception d'unité de chauffage (22), et **en ce que** le boîtier d'unité de chauffage (16) dans une zone de raccordement en amont (24) a un contour circonférentiel interne essentiellement rond, ou/et dans une zone de raccordement en aval (26) a un contour circonférentiel interne essentiellement rond.

14. Dispositif de chauffage des gaz d'échappement selon l'une des revendications précédentes, **caractérisé en ce que** chaque unité de chauffage (32) comprend une enveloppe (34) qui est allongée dans la direction de l'axe longitudinal d'unité de chauffage (H) et dans l'enveloppe (34) comprend un élément conducteur de chaleur (36) et sur un côté extérieur de l'enveloppe (34) comprend une formation de transmission de chaleur (38) ou/et **en ce que** chaque unité de chauffage est supportée avec sa première zone d'extrémité longitudinale d'unité de chauffage (44) ou/et sa deuxième zone d'extrémité longitudinale d'unité de chauffage (46) sur la structure de support (52) de manière à être mobile dans la direction longitudinale d'unité de chauffage (H).

15. Dispositif de chauffage des gaz d'échappement selon la revendication 14, **caractérisé en ce que** dans au moins une, de préférence chaque, unité de chauffage (32) la formation de transmission de chaleur (38) présente une pluralité de portions de transmission de chaleur (40) qui sont successives dans la direction de l'axe longitudinal d'unité de chauffage (H) et sont essentiellement mutuellement parallèles, ou/et **en ce que** dans au moins une, de préférence chaque, unité de chauffage (32), la formation de transmission de chaleur (38) est configurée en méandres, avec une pluralité de portions de transmission de chaleur (40) qui sont essentiellement parallèles entre elles et reliées les unes aux autres par des portions de connexion (42), ou/et **en ce qu'**au moins une formation de transmission de chaleur (38) est prévue sur le côté extérieur des enveloppes (34) d'au moins deux unités de chauffage (32).

16. Dispositif de chauffage des gaz d'échappement pour un moteur à combustion interne, comprenant au moins un dispositif de traitement des gaz d'échappement, de préférence un convertisseur catalytique ou/et un filtre à particules, et un dispositif de chauffage des gaz d'échappement (10), selon l'une des revendications précédentes, qui est en amont dudit au moins un dispositif de traitement des gaz d'échappement.
